# EUROPÄISCHE PATENTSCHRIFT

(11) **EP 0 805 954 B1**
(45) Veröffentlichungstag und Bekanntmachung des Hinweises auf die Patenterteilung: **11.04.2001**
(21) Anmeldenummer: 96939095.4
(22) Anmeldetag: 18.11.1996
(51) Int. Cl.: G01D 5/26

(54) **LÄNGENMESSEINRICHTUNG ZUR MESSUNG DER RELATIVLAGE ZWEIER OBJEKTE**
LENGTH MEASURING APPARATUS FOR MEASURING THE RELATIVE POSITION OF TWO OBJECTS
APPAREIL DE MESURE DE LA LONGUEUR SERVANT A MESURER LA POSITION RELATIVE DE DEUX OBJETS

(30) Priorität: 23.11.1995 DE 19543647
(43) Veröffentlichungstag der Anmeldung: 12.11.1997
(73) Patentinhaber: Dr. Johannes Heidenhain GmbH, 83301 Traunreut (DE)
(72) Erfinder: BÖGE, Ludwig, D-07747 Jena (DE); FREITAG, Hans-Joachim, D-07749 Jena (DE)
(86) Internationale Anmeldenummer: EP9605078
(87) Internationale Veröffentlichungsnummer: WO9719324

(56) Entgegenhaltungen:
- US-A- 4 152 837
- US-A- 4 791 289

## Beschreibung

Die Erfindung bezieht sich auf eine Längenmeßeinrichtung, die einen Maßstab mit einer Teilung und eine Abtasteinheit mit einem Meßkopf und einem Meßwagen aufweist, bei der der Maßstab über Halteelemente mit einem Objekt verbindbar ist und die Teilung des Maßstabes von der Abtasteinheit in Längsrichtung abtastbar ist, wobei die Abtasteinheit über einen Mitnehmer mit einem anderen Objekt verbindbar ist und die Abtasteinheit über einen Koppelpunkt einer auslenkbaren elastischen Koppeleinrichtung am Mitnehmer angekoppelt ist. Solche Längenmeßeinrichtungen werden z.B. als kombinierte Positionier- und Meßeinrichtungen im Werkzeugmaschinenbau und im allgemeinen Maschinenbau eingesetzt.

Aus dem Stand der Technik sind zahlreiche Meßeinrichtungen bekannt, bei denen die Relativbewegungen, z.B. zweier Maschinenbauteile zueinander, hochgenau gemessen werden. Dabei werden hohe Anforderungen an die Führung der Abtasteinheit gestellt, und zwar sowohl was die Lagetoleranzen, wie auch was die Verdrehtoleranzen betrifft. Im Werkzeugmaschinenbau erfüllen die Maschinenführungen diese hohen Anforderungen nicht, so daß die Abtasteinheit üblicherweise in einem speziellen Meßwagen aufgenommen wird, der auf einer meßsysteminternen Hilfsführung geführt und zum Maßstab ausgerichtet ist. Zum Ausgleich der Führungsabläufe beider Führungen zueinander werden zwischen dem Mitnehrner, der fest am ersten Maschinenelement befestigt ist, und dem Meßwagen, der auf der Hilfsführung im Meßsystem läuft, in Meßrichtung Koppelglieder angeordnet..

Aus der DE-PS 39 08 260 ist eine Anordnung bekannt geworden, bei der sich zwischen einer ebenen Fläche am Meßwagen und einer weiteren ebenen Fläche am Mitnehmer eine Kugel befindet, die über eine Feder in Kontakt mit den Anlageflächen gehalten wird. Die über die Feder erzwungene kraftschlüssige Ankopplung erfordert zum einen starke Federkräfte und zur Reduzierung der Hertz'schen Abplattungen gehärtete Anlageflächen zwischen Kugel und Mitnehmer bzw. Kugel und Meßwagen. Darüber hinaus ist ein relativ großer Fertigungs- und Justieraufwand notwendig, um die senkrecht zur Meßrichtung verlaufende Anlagefläche auszurichten und die Meßwertfehlergrenzen einzuhalten.

Eine andere Art der Längenmeßeinrichtung, bei der zwischen dem Mitnehmer und dem Meßwagen ein Koppelelement in Form eines Drahtes angeordnet ist, wird in der DE-PS 28 10 341 beschrieben. Das Koppelelement ist dabei mit einem Ende am Mitnehmer und mit dem anderen Ende am Meßwagen eingespannt. Beim Ausgleich der Führungsfehler bewegt sich der Koppelpunkt annähernd kreisbahnförmig mit dem Radius der Koppeldrahtlänge. Die daraus resultierenden Meßfehler sind in entscheidendem Maß von der Lage der Koppelpunkte entsprechend den Anbautoleranzen des Meßsystems an ein Maschinenteil abhängig.

Bei großen Auslenkungen nimmt die Längssteifigkeit des Koppelelementes stark ab, was zu Meßfehlern führt, insbesondere bei großen dynamischen Belastungen,und bei Meßrichtungsumkehrungen.

Ausgehend von dem geschilderten Stand der Technik liegt der Erfindung die Aufgabe zugrunde, eine einfach aufgebaute, leicht und mit geringem Aufwand herstellbare und hochgenau Längenmeßeinrichtung zur Messung der Relativlage zweier Objekte zur Verfügung zu stellen, die eine vorzügliche wirksame Übertragungsbewegung zwischen Mitnehmer und Abtasteinrichtung und damit eine hohe Meßgenauigkeit gewährleistet.

Diese Aufgabe wird durch eine Längenmeßeinrichtung mit den Merkmalen des Anspruches 1 gelöst.

Gemäß einer bevorzugten Ausbildung der Erfindung ist der Koppelpunkt an einer Stelle angeordnet, an der die resultierenden Federkonstanten zwischen dieser Stelle und der einen Verbindungsstelle einerseits sowie der anderen Verbindungsstelle andererseits annähernd gleich groß sind.

Bei einer anderen vorteilhaften Weiterbildung der Erfindung enthält die Koppeleinrichtung Dehnungszonen, die ihrerseits in Längsrichtung sinusförmig bzw. kosinusförmig verlaufen.

Es ist ferner vorteilhaft, wenn bei der erfindungsgemäßen Längenmeßeinrichtung die Koppeleinrichtung in ihrer Längsausdehnung zwischen den beiden Verbindungsstellen unterschiedliche Querschnitte aufweist.

Bei einer anderen vorteilhaften Ausgestaltung der Erfindung weisen die in Längsrichtung zwischen den Verbindungsstellen liegenden Querschnitte der Koppeleinrichtung bei gleichem Abstand zum Koppelpunkt gleiche Querschnittsflächen und/oder Querschnittsformen auf.

In einer besonders bevorzugten Ausgestaltung der Erfindung besteht die Koppeleinrichtung aus Federstahl.

Die Erfindung wird nachfolgend anhand der Zeichnung im Prinzip beispielshalber noch näher erläutert. Es zeigen:
Fig. 1 eine Prinzipdarstellung der erfindungsgemäßen Längenmeßeinrichtung;
Fig. 2 eine weitere Ausführungsform der erfindungsgemäßen Längenmeßeinrichtung;
Fig. 3 die Prinzipdarstellung einer Ausführungsform der erfindungsgemäßen Meßeinrichtung, dargestellt im dynamischen Zustand, und
Fig. 4 die Prinzipdarstellung einer weiteren Ausführungsform der erfindungsgemäßen Meßeinrichtung, dargestellt im dynamischen Zustand.

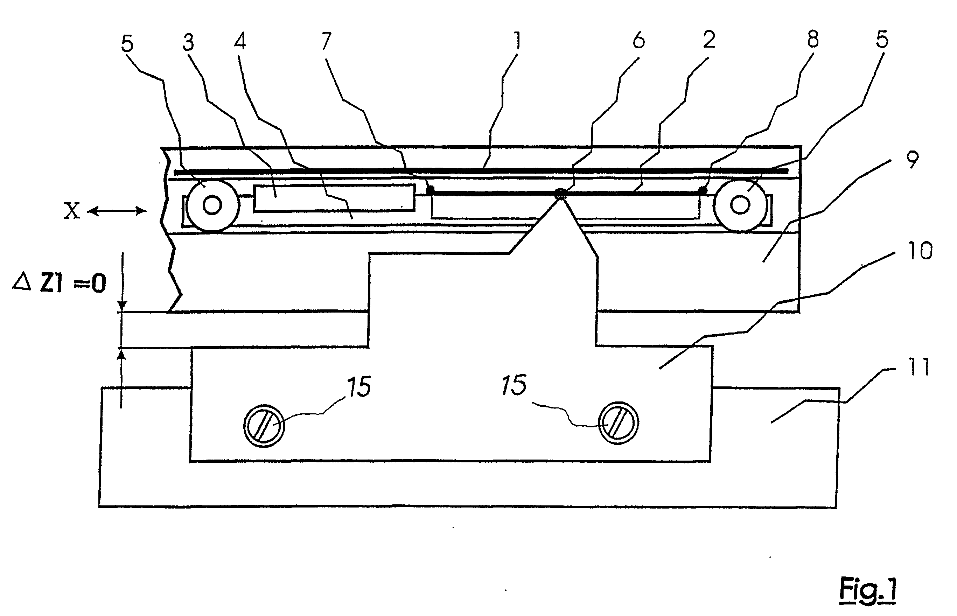

Bei der in Fig. 1 schematisch gezeigten Längenmeßeinrichtung ist ein Maßstab 1 über (nicht dargestellte) Halteelemente mit einem Objekt 9 verbunden. Eine Abtasteinheit, die aus einem Meßkopf 3, einem Meßwagen 4 und zwei Rollen 5 besteht, gleitet während des Meßvorganges in einer Nut des Objektes 9.

Über zwei Verbindungsstellen 7, 8 ist eine Koppeleinrichtung 2 beidseitig fest mit dem Meßwagen 4 verbunden. Die Verbindungsstellen 7, 8 werden durch allgemein in der Präzisionsmechanik übliche Befestigungsarten, wie z.B. Laserschweißen, realisiert. Sie können aber auch gegebenenfalls durch formschlüssige Verbindungen dargestellt werden.

Ein Mitnehmer 10, der über geeignete Verbindungselemente, z.B. Schrauben 15, an einem anderen Objekt 11 befestigt ist, ist mit der Koppeleinrichtung 2 über einen Koppelpunkt 6 formschlüssig verbunden. Dieser Koppelpunkt 6 kann aber auch z.B. durch Laserschweißung erstellt werden.

Die in Fig. 1 dargestellte Koppeleinrichtung 2 weist in Längsrichtung x zwischen den Verbindungsstellen 7 und 8 einen unterschiedlichen Querschnitt auf. Bei gleichmäßiger Materialstärke ist damit die Koppeleinrichtung an einigen Stellen mit einer Verbreiterung versehen, wodurch die Biegespannung in der Koppeleinrichtung im Bereich der Verbreiterung herabgesetzt wird.

Unabhängig von der Gestaltung der Querschnittsform muß jedoch die Bedingung einer gleichen resultierenden Federkonstante am Koppelpunkt 6 erfüllt sein. Als Material für die Koppeleinrichtung 2 kommt bevorzugt Federstahl, z.B. CrMo-Stahl, zum Einsatz.

Infolge Anbautoleranzen des Meßsystems kommt es zu unterschiedlichen Abständen zwischen dem Mitnehmer 10 und dem Objekt 9 im stationären Zustand. Bei Δz1 = 0 befindet sich die auslenkbare elastische Koppeleinrichtung 2 in ihrer nicht-ausgelenkten Null-Lage (Ausgangslage).

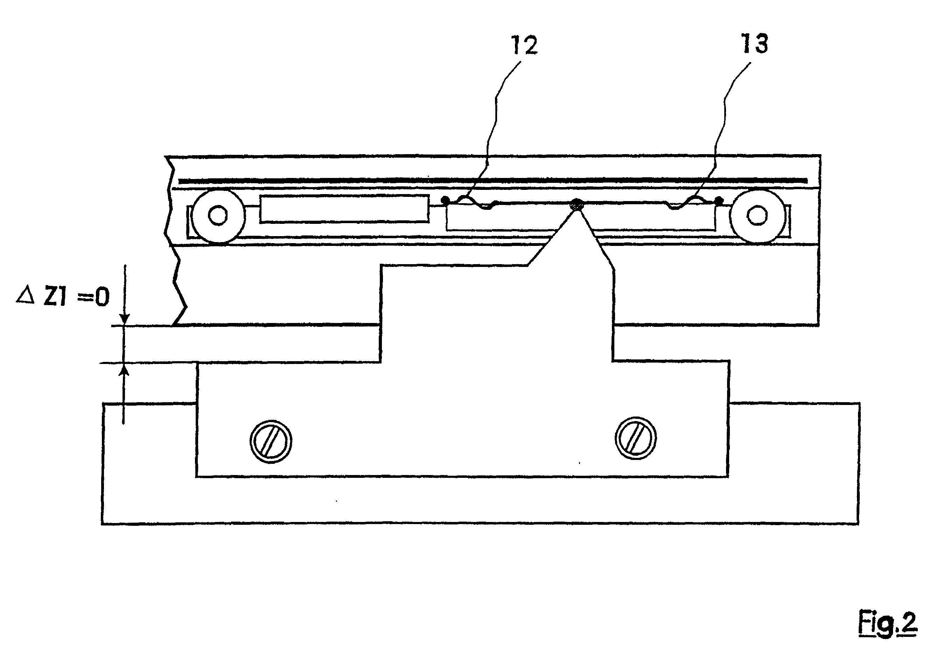

In Fig. 2 wird eine andere Ausführungsform für die erfindungsgemäße Längenmeßeinrichtung dargestellt, bei der, im Unterschied zu der Ausführungsform nach Fig. 1, die Koppeleinrichtung 2 zwei Dehnungszonen 12 und 13 besitzt, die vorteilhafterweise sinus- bzw. kosinusförmig ausgebildet sind. Auch der Einsatz anderer Formen hierfür ist möglich, wenn sichergestellt wird, daß der Koppelpunkt 6, wie in Fig. 1, an einer Stelle angeordnet ist, an der die resultierenden Federkonstanten zwischen dieser Stelle und der einen Verbindungsstelle 7 einerseits sowie der anderen Verbindungsstelle 8 andererseits annähernd gleich groß sind. Zulässige Abweichungen/Differenzen in den Federkonstanten ergeben sich aus den zugelassenen Meßfehlertoteranzen.

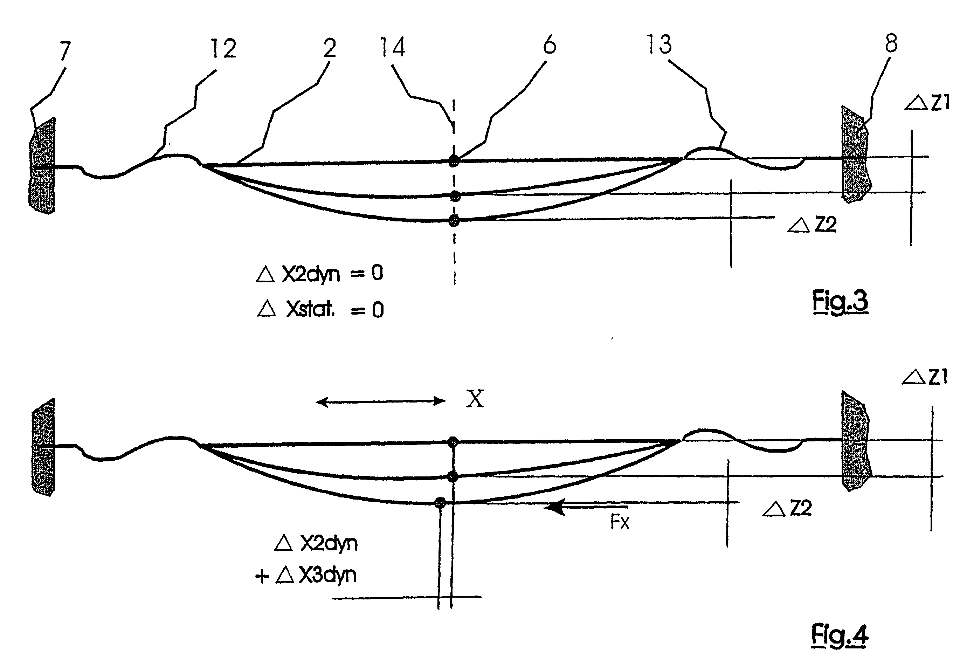

Die in Fig. 3 nur ganz im Prinzip dargestellte Ausführungsform einer Meßeinrichtung zeigt eine Verlagerung des Koppelpunktes 6 um einen Betrag Δz1. Im dynamischen Zustand, also bei Durchfahren der Abtasteinheit im Objekt 9 während der Messung, kommt es dann zu einer weiteren Verlagerung des Koppelpunktes 6 um den Betrag Δz2, wobei dies durch Kapselungeradheiten und Kapseldurchhänge hervorgerufen wird. Durch die beidseitig feste Verbindung der auslenkbaren elastischen Koppeleinrichtung 2 und die bezüglich der Federkonstanten symmetrische Lage des Koppelpunktes 6 vollzieht sich die Verlagerung des Koppelpunktes 6 um Δz1 und Δz2 auf einer Geraden 14, die senkrecht zur Verbindungslinie zwischen den Verbindungsstellen 7 und 8 steht. Damit ist der Meßfehler Δx2_{dyn} = 0 und es tritt kein Meßfehler auf.

Wenn eine Verfahrrichtung auftritt, wie sie in Fig. 4 dargestellt ist, kommt es zu einer Beschleunigungskraft Fx und damit nur zu einem Meßfehler Δx3_{dyn}.

Zum Abbau von Biegespannungen in der auslenkbaren, elastischen Koppeleinrichtung 2 (Δz1, Δz2) sind die Dehnungszonen 12, 13 beispielsweise sinusförmig ausgebildet und der Querschnitt der Koppeleinrichtung 2 ist so dimensioniert, daß ein vorgegebener zulässiger Meßfehler, hervorgerufen durch die Beschleunigungskraft Fx, nicht überschritten wird. Damit wird eine Mindeststeifigkeit in Längsrichtung x (Verfahrrichtung) gewährleistet.

## Patentansprüche

1. Längenmeßeinrichtung, die einen Maßstab (1) mit einer Teilung und eine Abtasteinheit mit einem Meßkopf (3) und einem Meßwagen (4) aufweist, bei der der Maßstab (1) über Halteelemente mit einem Objekt (9) verbindbar ist und die Teiluqg des Maßstabes (1) von der Abtasteinheit in Längsrichtung X abtastbar ist, wobei die Abtasteinheit über einen Mitnehmer (10) mit einem anderen Objekt (11) verbindbar ist und die Abtasteinheit über einen Koppelpunkt (6) einer auslenkbaren elastischen Koppeleinrichtung (2) am Mitnehmer (10) angekoppelt ist, dadurch gekennzeichnet, daß die Koppeleinrichtung (2) an dem Meßwagen (4) der Abtasteinheit an zwei Verbindungsstellen (7, 8) befestigt und zwischen diesen Verbindungsstellen (7, 8) der Koppelpunkt (6) an der Koppeleinrichtung (2) angeordnet ist.

2. Längenmeßeinrichtung nach Anspruch 1, dadurch gekennzeichnet, daß die Verbindungsstellen (7, 8) der Koppeleinrichtung (2) fest mit dem Meßwagen (4) verbunden sind.

3. Längenmeßeinrichtung nach Anspruch 1 oder 2, dadurch gekennzeichnet, daß der Koppelpunkt (6) an einer Stelle angeordnet ist, an der die resultierenden Federkonstanten zwischen dieser Stelle und der einen Verbindungsstelle (7) einerseits sowie zwischen dieser Stelle und der anderen Verbindungsstelle (8) andererseits annähernd gleich groß sind.

4. Längenmeßeinrichtung nach einem der Ansprüche 1 bis 3, dadurch gekennzeichnet, daß die Koppeleinrichtung (2) Dehnungszonen (12, 13) enthält.

5. Längenmeßeinrichtung nach Anspruch 4, dadurch gekennzeichnet, dass die Dehnungszonen (12, 13) in Längsrichtung (x) sinusförmig verlaufen.

6. Längenmeßeinrichtung nach einem der Ansprüche 1 bis 5, dadurch gekennzeichnet, daß die Koppeleinrichtung (2) in ihrer Längsausdehnung X zwischen den beiden Verbindungsstellen (7, 8) unterschiedliche Querschnitte aufweist.

7. Längenmeßeinrichtung nach einem der Ansprüche 1 bis 5, dadurch gekennzeichnet, daß die in Längsrichtung X zwischen den Verbindungsstellen (7, 8) liegenden Querschnitte der Koppeleinrichtung (2) bei gleichem Abstand zum Koppelpunkt (6) gleiche Querschnittsflächen und/oder Querschnittsformen aufweisen.

8. Längenmeßeinrichtung nach einem der Ansprüche 1 bis 7, dadurch gekennzeichnet, daß die Koppeleinrichtung (2) aus Federstahl besteht.

## Claims

1. Length measuring device which has a measurement scale (1) with a division and a scanner unit with a measuring head (3) and a measuring carriage (4), in which the scale (1) can be connected via holding elements to an object (9) and the division of the scale (1) can be scanned by the scanner unit in the longitudinal direction X, the scanner unit being connectable via a carrier (10) to another object (11) and the scanner unit being coupled to the carrier via a coupling point (6) of a deflectable resilient coupling device (2), **characterised in that** the coupling device (2) is secured to the measuring carriage (4) of the scanner unit at two connection points (7, 8) and the coupling point (6) is arranged on the coupling device (2) between these two connection points (7, 8).

2. Length measuring device according to claim 1, **characterised in that** the connection points (7, 8) of the coupling device (2) are securely connected to the measuring carriage (4).

3. Length measuring device according to claim 1 or 2, **characterised in that** the coupling point (6) is arranged at a location at which the resulting spring constants between this location and the one connection point (7) on the one hand, and between this location and the other connection point (8) on the other hand are approximately the same size.

4. Length measuring device according to one of claims 1 to 3, **characterised in that** the coupling device (2) has expansion zones (12, 13).

5. Length measuring device according to claim 4, **characterised in that** the expansion zones (12, 13) run in a sinusoidal manner in the longitudinal direction (x).

6. Length measuring device according to one of claims 1 to 5, **characterised in** that the coupling device (2) has differing cross-sections between the two connection points (7, 8) in its longitudinal expansion X.

7. Length measuring device according to one of claims 1 to 5, **characterised in that** that the cross sections of the coupling device (2) which lie in the longitudinal direction X between the connection points (7, 8) have identical cross-sectional areas and/or cross-sectional shapes at the same spacing from the coupling point (6).

8. Length measuring device according to one of claims 1 to 7, **characterised in that** the coupling device (2) consists of spring steel.

## Revendications

1. Dispositif de mesure de longueur comprenant une règle (1) avec une graduation et une unité de lecture avec une tête de mesure (3) et un chariot de mesure (4), dans lequel la règle (1) peut être reliée à un objet (9) par des éléments de maintien et la graduation peut être explorée par l'unité de lecture dans la direction longitudinale X, l'unité de lecture pouvant être reliée par un entraîneur (10) à un autre objet (11) et l'unité de lecture étant couplée avec l'entraîneur (10) par un point de couplage (6) d'un dispositif de couplage (2) élastique à déviation, caractérisé par le fait que le dispositif de couplage (2) est fixé au chariot de mesure (4) de l'unité de lecture en deux emplacements de liaison (7, 8) et que le point de couplage (6) est disposé sur le dispositif de couplage (2) entre ces emplacements de liaison (7, 8).

2. Dispositif de mesure de longueur suivant la revendication 1, caractérisé par le fait que les emplacements de liaison (7, 8) du dispositif de couplage (2) sont reliés de façon fixe au chariot de mesure (4).

3. Dispositif de mesure de longueur suivant la revendication 1 ou 2, caractérisé par le fait que le point de couplage (6) est disposé en un endroit auquel les constantes de ressort résultantes entre cet endroit et l'un des emplacements de liaison (7) d'une part et entre cet endroit et l'autre emplacement de liaison (8) d'autre part sont de valeurs sensiblement égales.

4. Dispositif de mesure de longueur suivant l'une quelconque des revendications 1 à 3, caractérisé par le fait que le dispositif de couplage (2) contient des zones de dilatation (12, 13).

5. Dispositif de mesure de longueur suivant la revendication 4, caractérisé par le fait que les zones de dilatation (12, 13) s'étendent selon une forme sinusoïdale dans la direction longitudinale X.

6. Dispositif de mesure de longueur suivant l'une quelconque des revendications 1 à 5, caractérisé par le fait que le dispositif de couplage (2) présente dans la direction longitudinale X entre les deux emplacements de liaison (7, 8) des sections transversales différentes.

7. Dispositif de mesure de longueur suivant l'une quelconque des revendications 1 à 5, caractérisé par le fait que les sections transversales du dispositif de couplage (2) situées dans la direction longitudinale X entre les emplacements de liaison (7, 8) présentent, pour une même distance par rapport à l'emplacement de couplage (6), les mêmes aires de section et/ou formes de section.

8. Dispositif de mesure de longueur suivant l'une quelconque des revendications 1 à 5, caractérisé par le fait que le dispositif de couplage (2) est en acier à ressort.
